Europäisches Patentamt

European Patent Office

Office européen des brevets

(19)

(11) Publication number: **0 234 248**
**B1**

# EUROPEAN PATENT SPECIFICATION

(12)

(45) Date of publication of the patent specification:
12.09.90

(21) Application number: **87100626.8**

(22) Date of filing: **19.01.87**

(51) Int. Cl.⁵: **B01D 53/34**

---

(54) Process for the removal of nitrogen oxides (nx oy) from waste gases of ammonia oxidation plants.

---

(30) Priority: **20.01.86 IT 1911886**

(43) Date of publication of application:
**02.09.87 Bulletin 87/36**

(45) Publication of the grant of the patent:
**12.09.90 Bulletin 90/37**

(84) Designated Contracting States:
**DE FR GB IT NL**

(56) References cited:
**DE-A- 2 736 797**

**CHEMIKER-ZEITUNG/CHEMISCHE APPARATUR,
vol. 89, no. 18, 1965, pages 632-635; H. VOGEL et al.:
"Die Vernichtung der Stickstoffoxide in Restgasen"**

(73) Proprietor: **CHIMICA DEL FRIULI S.p.A., Piazzale F.
Marinotti 1, I-33050 Torviscosa (Udine)(IT)**

(72) Inventor: **Scaltritti, Giovanni, Via Ramazzotti,
I-33052 Cervignano del Friuli (Udine)(IT)**
Inventor: **Dal Moro, Anacleto, Via San Savino 8,
I-36022 San Giuseppe di Cassola Vicenza(IT)**

(74) Representative: **Garrone, Fernando, Internazionale
Brevetti s.r.l. Via Brentano 2, I-20121 Milano(IT)**

ACTORUM AG

**Description**

The combustion of ammonia and air at 850°C in the presence of catalysts gives rise to the formation of nitrogen oxide. The absorption in suitable liquid phases of such gases gives rise to known and important industrial products. So, i.e., the absorption of $N_2O_5$ in $H_2O$ gives rise to $HNO_3$; the absorption of an equimolar mixture, $NO + NO_2 = N_2O_3$ in $H_2SO_4$ leads to the formation of nitrosyl hydrogen sulphate ($NOHSO_4$).

The plants for the production of such compounds, however, after the stage of absorption in the liquid phase, produce a waste gas which still contains 0.1–0.5% by volume of nitrogen oxide which is discharged into the atmosphere.

Such nitrogen oxides are toxic both for the acute and chronic intoxication; besides they cause acid rains with related environmental problems.

The presence of the nitrogen oxides gives a coloring from yellow to reddish to the waste gas according to their starting concentration and to the dilution in the air.

Even if the simple elimination of the waste gas coloring, obtained by dilution with air, as happened in tha past, reduces the danger of the gas because of the reduction of the nitrogen oxides concentration, it does not eliminate its presence in the atmosphere. In the literature numerous methods for the removal of the nitrogen oxides are mentioned, such as:

– Combustion of the oxides with air on Pt Pd catalysts – [Anderson, H.C. et al. – Ind. & Eng. Chem. pp 199–204, March (1961)].

– Catalytic reduction to N2 [Anderson, H.C. et al. – Ind. & Eng. Chem. pp 199–204, March (1961)].

– Removal by washing with caustic soda or lime milk [Sheigh, H.R.L.; Can. J. Chem. Eng. 3.36, (1958)].

– Absorption in aqueous liquid phase after treatment with various chemical agents such as, for example, H2O2: [Belg. BE. 888 902 (1981)], 03 (Ge. Off. 3 233 316 (1984)], NAClO (Ohr, Powietrza 1981, 15(3), 63–7 (Pol); Chem. Ab. 222 518, 96 1982)].

The mentioned methods usually require complex and expensive plants and, in some cases, they are dangerous and without any possibility to recover the nitrogen oxides (combustion, catalytic reduction). Said methods are on the contrary, continuously consumpng reagents.

It is known form Ullmanns Encyclopädie der technischen Chemie 15, page 49 (1964) that the nitrogen oxides of $NO + NO_2$ in the molar ratio of 1:1 (= $N_2O_3$) can be absorbed in $H_2SO_4$ to give $NOHSO_4$ according to the following relation:

I) $N_2O_3 + 2H_2SO_4 \text{--------} 2NOHSO_4 + H_2O$.

In $N_2O_3$ and $NOHSO_4$ nitrogen is in its formal oxidation state $N^{3+}$: the mentioned reaction is therefore formally a simple salification which happens after the absorption of the gas $N_2O_3$ in the liquid $H_2SO_4$.

In case that oleum is used ($SO_3$ in $H_2SO_4$) the formation of $H_2O$ can be avoided and said salification becomes:

II) $N_2O_3 + H_2SO_4 + SO_3 \text{-------} 2NOHSO_4$

In these reactions the compound $N_xO_y$ is formed by the equimolar combination of the nitrogen oxides $NO + NO_2$ ($NO + NO_2 \text{-----} N_2O_3$). However, in case of a generic mixture of $NO + NO_2$ with a molar ratio different from 1, as in the case of the $N_xO_y$ present in the waste gas of the ammonia oxidation plants, the absorption in $H_2SO_4$ and the transformation of the oxides in $NOHSO_4$ remains limited to the formal part of $N_2O_3$ present in the mixture. Actually it is found that the global reduction of the $N_xO_y$ does not exceed 25–30% of the starting oxides.

In fact if a generic mixture of $N_xO_y$ is formed by:

NO

$NO_2$

$N_2O_3$

$N_2O_4$

in indefinite and variable proportions, such as in the waste gases of the ammonia oxidation plants, nitrogen is not in the constant formal oxidation state to allow a specific salification such as in I) and II).

An aim of the present invention is therefore to obtain a complete removal of the nitrogen oxides, resolving at its roots the problem of pollution, by a process that does not require expensive plants in their installation and in their maintaining.

Another aim is the recovery of the nitrogen oxides giving rise to a useful recycle product.

The Applicant has surprisingly found a process based on the absorption in liquid phase of easy accomplishment, and of very high efficiency with about 90% recovery of the $N_xO_y$.

Said process is based on the absorption of the $N_xO_y$ in a liquid phase composed of a mixture including $H_2SO_4$ eventually partially substituted by oleum, and $HNO_3$. An object of the present invention is therefore a process for the removal of the $N_xO_y$ nitrogen oxides from the waste gases of catalytic oxidation plants of ammonia characterized by the fact that said nitrogen oxides are absorbed in a liquid phase formed by a mixture comprising at least (a) sulphuric acid, eventually partially substituted by oleum and (b) nitric acid. Such absorption is conveniently carried out at a temperature comprised between 10° and 90°C and preferably between 20° and 70°C. The component (b) of the mixture is preferably used in a concentration in the liquid phase outlet lower than 3% in weight and preferably comprised between 0.05% and 0.2%, the rest being formed by component (a).

The absorption is carried out in countercurrent to facilitate the contact between the gas containing the nitrogen oxides and the liquid phase, preferably in a packed column in which the gas enters at the bottom while the liquid is fed by a suitable distribution system according to the known methods used for such operations in the chemical industry.

Further, by the removal carried out according to this invention, a sulphuric solution of nitrosulphuric acid ($NOHSO_4$) is obtained, which is the base reagent for the nitrosation of numerous organic compounds, i.e. nitrosation of the exahydrobenzoic acid to give at the end caprolactam (US Patent No. 3 356 675).

By concentration of the liquid phase in the outlet is meant to concentrate the nitric acid in the exhaust liquid phase which is drawn off from the nitrogen oxides removal plant.

It is, in fact, possible to analyse such concentration of the liquid phase in the outlet and, according to the results of such analyses, to control the addition of $HNO_3$ or the drawing off a part of the exhaust liquide phase, according to the cases.

Therefore, from an applicants point of view, the data about the concentration of the nitric acid in the liquid phase in the outlet are sufficient to determinate the other parameters of the process consequently and, particularly, the amount of nitric acid in the inlet.

Surprisingly, the presence of $HNO_3$ in the sulphuric acid incraeses the absorption up to values of at least 90%.

Other components which can be present in the liquid phase without being indispensable are:

$H_2O$ 0–10% by weight

$SO_3$ 0–30% by weight

$H_2O$ is partially formed by the chemical processes of absorption, partially it may already be present in the liquid phase depending if anhydrous acids or the common industrial products such as $HNO_3$ 65% and $H_2SO_4$ 96% are used. As already indicated oleum can be used instead of $H_2SO_4$: the presence of $SO_3$ in such a case removes the water from the system.

In this last case, the product recovered from the absorption column is composed of an anhydrous solution of $NOHS_4$. Generally the recovered end product is formed in this way:

$NOHSO_4$ 2.5–55%

$HNO_3$ residue = 0.05%

$H_2O$ 0.0–10%

$SO_3$ 0.0–10%

$H_2SO_4$ remaining up to 100

For better illustration of the invention, but without limiting it, the following examples are given, in which the titration of the $N_xO_y$ is carried out with $KMnO_4$.

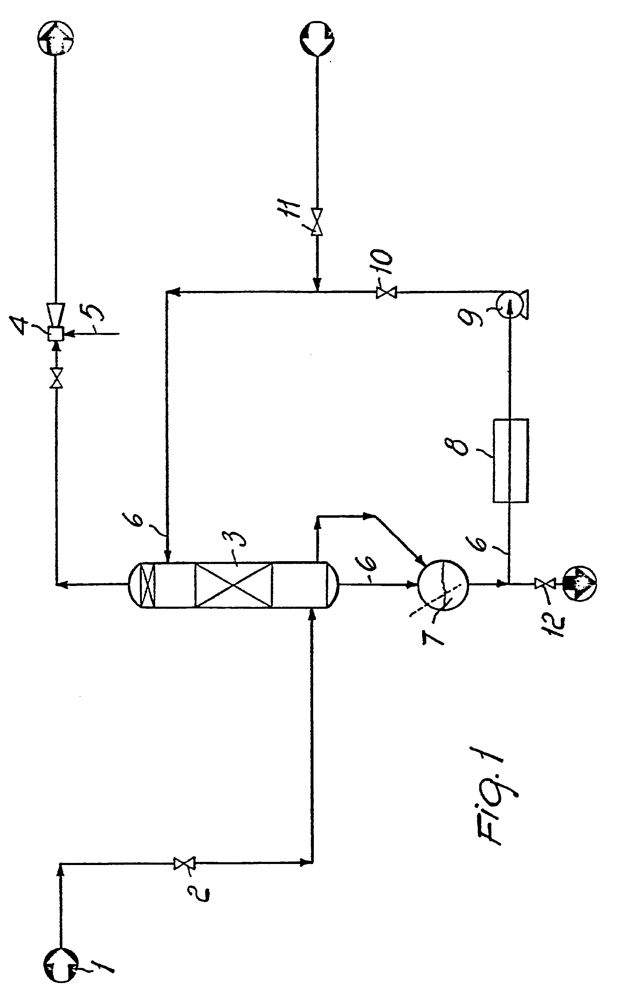

Fig. 1 shows the scheme of a plant which can be used for carrying out the process according to the invention.

With reference to Fig. 1, a waste gas flow 1 comes from an ammonia oxidation plant, such waste gas containes nitrogen oxides in a concentration which is variable both regarding the type and the amount of oxides.

Flow 1, controlled by valve 2, is fed to the bottom of the packed absorption column 3.

The gases pass upwards through column 3 and are discharged purified in the atmosphere, through ejector 4 fed by steam 5.

Column 3 is fed on the top with the liquid phase 6 which goes out at the bottom and is stored in tank 7.

The liquid phase 6 is therefore heated in heater 8 and recycled to the top through pump 9. Valve 10 allows the regulation of the flow of the liquid phase 6.

Through valve 12 the exhaust liquid phase 6 is drawn off, when the concentration of nitric acid, measured i.e. in tank 7, is in the preferred range.

If, according to the analysis of the nitric acid concentration in the liquid phase in the outlet of column 3, the concentration falls to too low levels, it is possible to feed a solution containing fresh nitric acid by valve 11. The process can work discontinuously, in this case the starting liquid phase 6 contains nitric acid in a high concentration, for example 5%.

Such liquid phase, at high concentration, is continuously recycled by pump 9 carrying out the removal of the nitrogen oxides without any drawing off through valve 12.

During the performance of the nitrogen oxides absorption, the nitric acid concentration gradually falls till the desired concentration, for example 0.5% is reached. At that point the exhaust liquid phase 6 is drawn off and replaced by fresh liquid. The exhaust phase contains a high $NOHSO_4$ concentration. The process can work continuously, in this case the exhaust phase 6 is drawn off through valve 12, such exhaust phase 6 is analysed to determinate the nitric acid concentration, while, through valve 11, fresh nitric acid solution is continuously fed, in such amount to maintain the nitric acid concentration in the liquid phase 6 at the wanted concentration.

Example 1 shows a comparison example in which the absorption is carried out in absence of nitric acid.

Example 2 to 7 show a first embodiment of the invention in which the process is carried out discontinuously.

Example 8 shows a second embodiment of the invention in which the process is carried out continuously.

COMPARISON EXAMPLE 1

(Absorption liquid: $H_2SO_4$)

In an absorption column of 1,850 mm in height and 200 mm in diameter, packed with rashing rings up to 1,000 mm in height, 45 kg $H_2SO_4$, contained in a rank linked with the bottom of said column, are maintained in recycle at the speed of 1,500 l/h through a pump.

From the bottom of the column 31.4 m³/h waste gas coming from an ammonia oxidation plant are fed continuously. Said gas contains 7,334 ppm of $N_xO_y$ nitric oxides.

The gas discharged on the top of the column contains 5,476 ppm of nitric oxides. The calculated removal is equal to 25.3%.

EXAMPLES 2–6

(Absorption liquid: $HNO_3$ in $H_2SO_4$ in various concentrations)

In an absorptoin column of 1,850 mm in height and 200 mm in diameter, packed with rasching rings up to 1,000 mm in height, 45 kg of a mixture containing $HNO_3$ in amounts as indicated in Table 1 are maintained in recycle at the speed of 1,500 l/h through a pump, the rest being sulphuric acid.

From the bottom of the column 31.4 m³/h waste gas coming from an ammonia oxidation plant are fed. Said gas contains $N_xO_y$ in amounts as indicated in Table I.

The gas in the outlet on the top of the column contains nitric oxides in amounts as indicated in Table 1.

The removal, calculated as 100 ($N_xO_y$ inlet − $N_xO_y$ outlet)/$N_xO_y$ inlet, is indicated in Table 1.

The absorption is continued till the concentration of the circulating nitric acid does not fall to the level indicated in the last column of Table 1. Then the exhaust liquid phase is drawn off.

Considering in particular Example 6, precipitation of crystalline $NOHSO_4$, due to the high starting concentration of $HNO_3$ and consequently to the final high concentration of $NOHSO_4$, was noted.

EXAMPLE 7

(Absorption liquid: $HNO_3$ in oleum)

In an absorption column of 1,850 mm in height and 200 mm in diameter, packed with rasching rings up to 1,000 mm in height, 45 kg of a mixture containing 5% of $HNO_3$ and 25% of free $SO_3$, the rest being sulphuric acid, are maintained in recycle at the speed of 1,500 l/h through a pump.

From the bottom of the column 31.4 m³/h waste gas coming from an ammonia oxidation plant are fed. Said gas contains $N_xO_y$ in an amount as indicated in Table 1. The removal, calculated as 100 ($N_xO_y$ inlet − $N_xO_y$ outlet)/$N_xO_y$ inlet, is indicated in Table 1.

EXAMPLE 8

(Absorption in liquid phase composed of $HNO_3$ in $H_2SO_4$ with continuous feeding of waste gas and absorption liquid)

In an absorption column of 1,850 mm in height and 200 mm in diameter, packed with rasching rings up to 1,000 mm in height, 45 kg of a solution containing 10% of $NOHSO_4$ dissolved in $H_2SO_4$ are maintained in recycle at the speed of 1,500 l/h through a pump: in such starting solution nitric acid is completely absent.

From the bottom of the column 31.4 m³/h waste gas coming from an ammonia oxidation plant containing 7,200 ppm of $N_xO_y$ are fed.

To the top of the column 15.5 kg/h of a solution of 2% of $HNO_3$ in $H_2SO_4$ (tot. fed 100% $HNO_3$ = 310 g/h), mixed together with the recycle liquid (see scheme 1), were fed; simultaneously, from the tank at the bottom of the column 15.5 kg/h were drawn off in order to maintain the amount of recycled liquid in the column constant and equal to 45 kg.

The analysis of the drawn off liquid gave:

– $NOHSO_4$: 11.1%, therefore about 1.720 g/h of nitrosylsulphuric acid were totally produced;

– $HNO_3$: 0.07%, therefore 10.8 g/h. out of the 310 g/h, remain not reacted.

The gas on the top of the column contains an amount of nitrogen oxides equal to 590 ppm with a removal efficiency of 91.8%.

TABLE 1

| Example | % HNO$_3$ in the starting mixture | % SO$_3$ in the starting mixture | N$_X$O$_Y$ in the inlet gas | N$_X$O$_Y$ in the outlet gas | Removal % | % HNO$_3$ in the ending mixture |
|---------|------|------|-------------|-------------|------|------|
| 1 | 0.0 | 0.0 | 7.334 ppm | 5.476 ppm | 25.3 | 0.0 |
| 2 | 0.5 | 0.0 | 6.325 ppm | 0.537 ppm | 91.5 | 0.05 |
| 3 | 1.0 | 0.0 | 7.627 " | 0.786 " | 89.7 | 0.3 |
| 4 | 2.0 | 0.0 | 5.980 " | 0.622 " | 89.5 | 0.1 |
| 5 | 5.0 | 0.0 | 6.065 " | 0.249 " | 95.8 | 0.2 |
| 6 | 10.0 | .0.0 | 5.570 " | 0.378 " | 93.2 | 3 |
| 7 | 0.5 | 25.0 | 4.743 " | 0.367 " | 92.2 | 0.05 |
| 8 | 0.07 | 0.0 | 7.200 " | 0.590 " | 91.8 | 0.07 |

As far as the NOHSO$_4$ production in the exhaust liquid phase is concerned, the following relation between the initial concentration of the nitric acid in the mixture and the concentration of the nitrosylsulphuric acid in solution after complete HNO$_3$ exhaustion has been found:

| % NHO$_3$ in the starting liquid phase | % NOHSO$_4$ in the end liquid phase |
|---------------------------------------|-------------------------------------|
| 0.5% | 3.0% |
| 2.0% | 10–12% |
| 5.0% | 25–30% |
| 10% | 55–60% |

For handling facility of the NOHSO$_4$ solutions even at low temperatures (10–30°C) without involving phenomenons of crystalline precipitations it is convenient (but not obligatory) to maintain the NOHSO$_4$ concentration below 30% during the discontinuous operation; consequently it is advisable that the concentration of nitric acid is lower than 5% in the starting charge phase of the discontinuous process.

Therefore it has been verified that in practice even very low concentrations of nitric acid allow to obtain nitrogen oxides removal in the order of 90%, see in particular example 8 carried out with a concentration of 0.07%.

The practicability of the process with as low nitric acid concentrations clearly allows to obtain a useful product NOHSO$_4$ having a low concentration of HNO$_3$ both with a continuous process in which continuously a low concentration of HNO$_3$ is maintained and with a discontinuous process which, even when high starting concentrations of HNO$_3$ are used, allows equally to obtain low concentrations of HNO$_3$ at the end of the process.

The fact that the NOHSO$_4$ contains low HNO$_3$ concentrations is of basic importance for the further uses of NOHSO$_4$ as nitrosation agent, which must be sufficiently pure.

On the other hand a direct NOHSO$_4$ purification to eliminate the HNO$_3$ is particularly complex and expensive.

## Claims

1. Process for the removal of N$_X$O$_Y$ nitrogen oxides contained in the waste gases of the ammonia catalytic oxidation plants characterized in that such nitogen oxides are absorbed in a liquid phase formed by a mixture comprising at least:
   a) sulphuric acid and
   b) nitric acid

2. Process according to Claim 1, characterized by the fact that said mixture includes also oleum.

3. Process according to Claims 1 and 2, characterized by the fact that said nitric acid is present in said mixture in the outlet liquid phase in a concentration lower than 3% by weight.

4. Process according to Claim 3, characterized by the fact that said nitric acid is preferably present in said mixture in the outlet liquid phase in a concentration comprised between 0.05% and 0.2% by weight.

5. Process according to any one of the previous claims characterized by the fact that it is carried out at a temperature comprised between 10°C and 90°C.

6. Process according to any one of the previous claims characterized by the fact that it is carried out at a temperature comprised between 20°C and 70°C.

7. Process according to Claim 1 characterized in that it is carried out discontinuously, the starting $HNO_3$ concentration of the total of the liquid phase being lower than 5% by weight.

**Patentansprüche**

1. Verfahren zur Entfernung von $N_xO_y$-Stickstoffoxiden, die in den Abgasen von Anlagen zur katalytischen Oxidation von Ammoniak enthalten sind, dadurch gekennzeichnet, daß solche Stickstoffoxide in einer flüssigen Phase absorbiert werden, die gebildet wird durch eine Mischung, umfassend mindestens:

a) Schwefelsäure und
b) Salpetersäure

2. Verfahren nach Anspruch 1, dadurch gekennzeichnet, daß die Mischung ebenfalls rauchende Schwefelsäure (Oleum) beinhaltet.

3. Verfahren nach den Ansprüchen 1 und 2, dadurch gekennzeichnet, daß die Salpetersäure in der Mischung im Auslauf der flüssigen Phase in einer Konzentration von weniger als 3 Gew.-% vorliegt.

4. Verfahren nach Anspruch 3, dadurch gekennzeichnet, daß die Salpetersäure vorzugsweise in der Mischung im Auslauf der flüssigen Phase in einer Konzentration zwischen 0,05 und 0,2 Gew.-% vorliegt.

5. Verfahren nach mindestens einem der vorangehenden Ansprüche, dadurch gekennzeichnet, daß es bei einer Temperatur zwischen 10°C und 90°C durchgeführt wird.

6. Verfahren nach mindestens einem der vorangehenden Ansprüche, dadurch gekennzeichnet, daß es bei einer Temperatur zwischen 20°C und 70°C durchgeführt wird.

7. Verfahren nach Anspruch 1, dadurch gekennzeichnet, daß es diskontinuierlich durchgeführt wird, wobei die $HNO_3$-Anfangskonzentration bezüglich der gesamten flüssigen Phase weniger als 5 Gew.-% beträgt.

**Revendications**

1. Procédé d'élimination des oxydes d'azote $N_xO_y$ contenus dans les gaz perdus d'installations d'oxydation catalytique de l'ammoniac, caractérisé en ce que de tels oxydes d'azote sont absorbés dans une phase liquide formée par un mélange comprenant au moins:

a) de l'acide sulfurique et
b) de l'acide nitrique.

2. Procédé selon la revendication 1, caractérisé par le fait que ledit mélange comprend aussi de l'oléum.

3. Procédé selon les revendications 1 et 2, caractérisé par le fait que ledit acide nitrique est présent dans ledit mélange dans la phase liquide de sortie en une concentration inférieure à 3% en poids.

4. Procédé selon la revendication 3, caractérisé par le fait que ledit acide nitrique est de préférence présente dans ledit mélange dans la phase liquide de sortie en une concentration comprise entre 0,05% et 0,2% en poids.

5. Procédé selon l'une quelconque des revendications précédentes, caractérisé par le fait qu'il est mis en œuvre à une température comprise entre 10°C et 90°C.

6. Procédé selon l'une quelconque des revendications précédentes, caractérisé par le fait qu'il est mis en œuvre à une température comprise entre 20°C et 70°C.

7. Procédé selon la revendication 1, caractérisé en ce qu'il est mis en œuvre de façon discontinue, la concentration initiale en $HNO_3$ de la phase liquide totale étant inférieure à 5% en poids.

Fig.1

EP 0 234 248 B1